# EUROPEAN PATENT APPLICATION

(11) **EP 4 446 940 A1**
(43) Date of publication of application: **16.10.2024**
(21) Application number: 24169453.8
(22) Date of filing: 10.04.2024
(51) Int. Cl.: G06K 19/077, B60R 13/10

(54) **WIRELESS TAG, CLOTHING ARTICLE, AND METHOD OF USER AUTHENTICATION**

(30) Priority: 11.04.2023 PL 44436923
(71) Applicant: Kantorowicz, Adam, 03-610 Warszawa (PL); Hamed, Mariusz Fraig, 02-760 Warszawa (PL)
(72) Inventor: Kantorowicz, Adam, 03-610 Warszawa (PL); Hamed, Mariusz Fraig, 02-760 Warszawa (PL)
(74) Representative: AOMB Polska Sp. z.o.o.

(57) **Abstract**

The invention provides a wireless tag configured for communication in NFC technology, as well as a clothing article comprising such wireless tag, and a method for authorization of a user with the use of the wireless tag.

A wireless tag comprising a radio arrangement (3) with a non-volatile memory, and the radio arrangement (3) is configured to transmit data, in particular in NFC technology, characterized in that the radio arrangement is within a rubber coating (2).

## Description

The invention provides a wireless tag configured for NFC technology communication, and a clothing article comprising such wireless tag, as well as a method for user authorization with the use of a wireless tag.

In the prior art wireless tags are known that use NFC technology. Such tags are usually visually unattractive and thus they are hardly useful for marketing purposes. Additionally, such tags also are not resistant to weather conditions, humidity or mechanical impacts and this further hinders their widespread use.

The subject-matter of the subject invention solves the above outlined problems.

The invention provides a wireless tag comprising a radio arrangement with a non-volatile memory. The radio arrangement is configured to transmit data, in particular in NFC technology. The wireless tag is characterized in that the radio arrangement is within a rubber coating, and preferably the radio arrangement is inundated within the rubber coating.

Preferably, the non-volatile memory is configured to store public data or private data.

Preferably, public data comprise at least one of: website address, IP address, mobile application data, location data, contact data, social network-related data, link for file downloading, medical data such as blood group or past illnesses.

Preferably, the private data comprise cryptographic data, preferably the cryptographic data enable user identification.

Preferably, the private data comprise at least one user-related information, in particular a dedicated user number, first name, surname, address, telephone number, mail address, localization, access authorization or cryptographic data such as a private key.

Preferably, it is in a form selected from a patch, preferably with openings for a seam, to be applied onto the clothing, or a charm for a key ring, and preferably it comprises a mounting hole, or a cup pad or a bar coaster, or a luggage tag or a zip fastener.

Preferably, the rubber coating is made of a material which in its contents does not comprise chemical compounds of the group of metals, preferably from the group of heavy metals.

Preferably, on the rubber coating there is a decoration, preferably the decoration being a password or code.

A further aspect of the invention is a clothing article characterized in that it comprises a wireless tag as described earlier, and the wireless tag is attached by sewing, gluing or by means of a Velcro fastener.

Preferably, it is a military clothing article or workwear article.

A further aspect of the invention is a method for user authorization, comprising the steps of:
a. reading-out of data from the wireless tag as described above
b. verifying of user's authorization based on the data from the wireless tag,
c. rendering access, upon correct verification, for the user to a restricted area.

Preferably, the protected area is a website or a restricted area such as a ski slope or a restricted area in a cultural event.

Preferably, prior to step a), the following steps are carried out:
d. logging-in at a website,
e. assigning, on a server, of the user's data to the data from the wireless tag.

Preferably, the user data is information about user's authorization, data enabling identification of the user, payment data, data related to cultural or sports events, such as a subscription ticket or a ticket.

Preferably, in step d, a code is necessary, and the code is preferably on the wireless tag or the code is provided independently of the wireless tag, preferably in a form selected from a group comprising a business card, a sticker, an email message.

The subject invention is schematically shown in drawings, where:
fig. 1 shows a cross-section of a wireless tag,
fig. 2 shows a top view of a wireless tag.

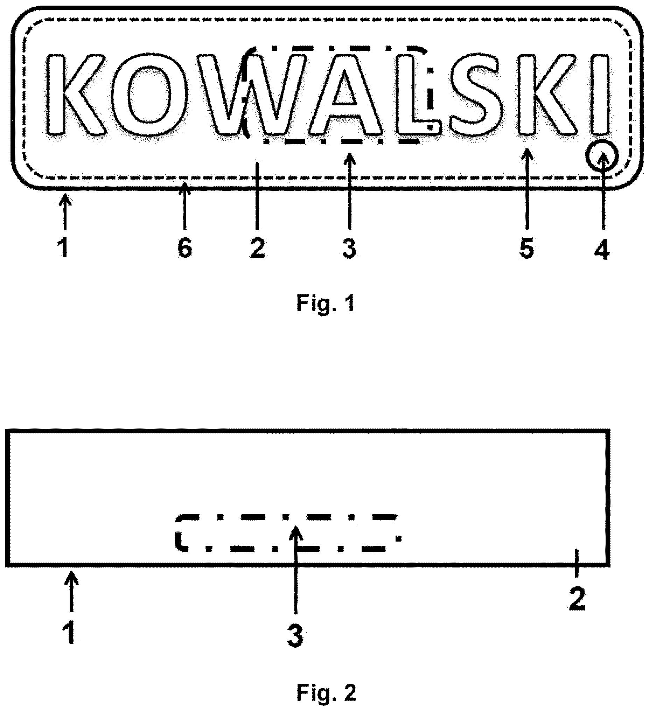

A wireless tag is shown in figs. 1 and 2. The wireless tag comprises a radio arrangement 3 with a non-volatile memory, and the radio arrangement 3 is configured to transmit data, in particular in the NFC technology. The radio arrangement 3 is in a rubber coating 2 - the radio arrangement 3 is inundated within a rubber coating 2 and forms a unitary object therewith, where the individual elements are not easily separable. This enhances mechanical strength of the solution as well as provides protection against external conditions such as humidity.

In another embodiment, the non-volatile memory is configured to store public data or private data. For example, the public data are the same for all the wireless tags 1 produced in the same batch, and the private data are different in each wireless tag 1.

In a further embodiment, the public data comprise at least one of: website address, IP address, mobile application address, location data, contact data, social network-related data, a link for file downloading, medical data such as blood group or past illnesses.

In still another embodiment, the private data comprise cryptographic data, preferably the cryptographic data enable identification of a user. For example, such data may the user number, first name, surname, address, telephone number, mail address, localization, access authorization or cryptographic data such as a private key.

In another embodiment, it is in a form selected from a patch, preferably with openings 6 for a seam, to be applied onto the clothing, or a charm for a key ring, and preferably it comprises a mounting hole 4, or a cup pad or a bar coaster, or a luggage tag or a zip fastener,

In a further embodiment, the rubber coating 2 is made of a material which in its composition does not comprise chemical compounds of the group of metals, preferably heavy metals. For example, such material is soft PVC, e.g., PVC 8728BP. Nevertheless, it should be noted that other materials may be also used such as the ones which dampen radio waves. In that case it is necessary to position the radio arrangement 3 as close as possible to the surface of the wireless tag 1. The use of a material that dampens radio waves may have beneficial effect on security of the data included on the medium when the readout thereof requires positioning of the reader in a close vicinity to the wireless tag 1, and may require readout of a specific side of the wireless tag 1.

In another embodiment, on the rubber coating 2, there is a decoration 6, preferably the decoration 6 being a password or code. It should be noted that the decoration 6 may be any manufacturable graphics, inscription, QR code, etc. Decoration 6 may be flat, convex, concave or combined. In the embodiment of fig. 1, decoration 6 has a form of an inscription with a surname (KOWALSKI), and a person skilled in the art will be aware that, in lieu of the inscription or in addition thereto, any graphics, logo, QR code or additional text or other decorative elements may be used.

Another aspect of the invention is a clothing article comprising a wireless tag 1 as described above. For example, such wireless tag 1 may be attached by sewing, gluing or by means of a Velcro fastener.

For example, the clothing article it is a military clothing article, a workwear or sportswear article. The wireless tag may comprise information related, for example, to a group of blood, past illnesses or other personal data to provide rescue men with information about the person being rescued.

Below, a method for user authorization with the use of a wireless tag is shown. The method comprises the following steps:
a. reading-out of the data from the wireless tag as described above,
b. verifying of user authorization based on the data from the wireless tag,
c. rendering access, upon correct verification, for the user to the respective protected area.

It should be noted that authorization verification may be carried out based on the authorization resulting from the mere fact of possessing of the wireless tag 1 (each wireless tag 1 enables access), or for some selected wireless tags 1. This means that both the public data and the private data may be used for verifying of user's authorization. It should be also noted that the protected area may be a computer memory or data (virtual area) or a real area (physical area).

The protected area may be a website or a restricted area, such as a ski slope and a restricted area in a cultural event. For example, the wireless tag 1 has a function of a ski pass. With ensured possibility of programming the wireless tag 1 with the use of a phone, upon payment of the pass for a downhill run, without any necessity for queuing - solely an NFC reader is needed on the skiing slope.

In a preferable embodiment, prior to step a, the following steps occur:
d. logging-in on the website,
e. assigning, on the server, of the user data to the data from the wireless tag.

Additional steps d and e enable providing wireless tags 1 to the users who may then link the wireless tag 1 with their account by themselves.

In another embodiment, the user data is information concerning user authorization, data to enable user identification, payment data, data related to cultural or sports events, such as a subscription ticket or a ticket.

In still another embodiment, in step d, a code is necessary, and preferably the code is on the wireless tag.

In a further embodiment, in step d, the code is provided independently of the wireless tag 1 - the code may be provided in a form selected from a group comprising a business card, a sticker, an email message, and a person skilled in the art will be aware of existence of other manners for providing a code.

An exemplary application of the invention is its use for marketing purposes. The wireless tag 1, in this embodiment, is a combination of two technologies:
Technology of wireless tags 1, in a form of a rubber element for clothes (such as, e.g., a patch) or accessories (such as, e.g., charms for key rings) and other objects, in which a radio arrangement 3 inundated within a rubber coating 2 is used and a wireless tag 1 in a form of a sticker - e.g., within the envelopes of CDs music stickers with wireless tags 1 are placed which when scanned redirect the recipients to the author's website (as described above) with music, video and additional content related to an album and an artist. In addition to basic information concerning the album, the website may contain additional contents such as interviews with the artist, photos from a recording session, lyrics of the songs, translations and much more.

Technology of websites with collective links, but in an author-related form, comprising at least one locked session accessible solely for a person who is the owner of a wireless tag 1. Such website, being linked with a specific object purchased from the artist, provides information concerning, e.g.:
a. a single or the entire music release - corresponding links to all streamings (set of all platforms on which a music piece may be listened to),
b. links to audio-video materials (e.g., to a channel at YouTube containing a playlist of the release or to individual single music videos),
c. links to the artist's (or artists') profile(s) in social media - all the links the artist is willing to provide for a specific release,
d. locked selection with contents concerning the release, accessible solely to the owner of a wireless tag 1 who possesses an access code obtained upon purchase. In the locked section, materials which are dedicated solely to the recipient with the wireless tag 1 are accessible, such as e.g.:
   i. audio-video materials from the origins of the release, so called backstage
   ii. photo-video relations from the release and promotion thereof, non-published in media,
   iii. bonus tracks, accessible for listening and/or downloading by the owner,
   iv. an opportunity to download a track in mp3 format for free - as the owner of a physical edition,
   v. communicator and/or forum where the artist may be in touch with his/her biggest fans,
   vi. information concerning tour related to the release and/or events which are organized by the artist in connection with the release,
   vii. recent information concerning upcoming issues, such as e.g. latest singles or albums or cooperation with other artists or upcoming new projects - first-hand information for loyal fans,
   viii. dedicated contests for the owners of wireless tags 1 which may be accessed only upon logging-in to the panel,
   ix. dedicated special products accessible and purchasable solely from the locked section,
   x. prior activation of purchase of a pre-order for a subsequent edition, accessible for persons who purchased the earlier one,
   xi. dedicated forum polls and surveys through which the recipients may influence e.g. further editions,
   xii. dedicated live streams such as e.g. material to be listened, meetings with fans, etc.
   xiii. any other forms of dedicated activity that may be conceived by the publisher or artist and restricted to the persons only who purchased the artist's wireless tag 1.

It should be also noted that the use of the wireless tag makes it possible to use it for data analysis. For example, wireless tag 1 or a server may perform suitable tasks carried out with the use of algorithms such as:
- Algorithm to assign an access code to a locked section. This algorithm will enable assigning an access code to each wireless tag 1 that will be sold as a physical product. Exclusively the persons who purchased the wireless tag 1 and possess the code will obtain access to a locked section with exclusive contents.
- Algorithm to manage digital contents. This algorithm will enable managing digital contents such as music tracks, music videos, backstage coverage, information about tours and art events, contests, etc. All this contents will be assigned to a specific wireless tag 1 and accessible for its owner only.
- Algorithm to identify the owner of the wireless tag 1: This algorithm will enable identification of the owner of the wireless tag 1 with the use of NFC technology. When the wireless tag 1 is applied to a compatible device, the algorithm will be able to read the unique identifier and assign contents to the respective user.
- Algorithm to assign specific contents to a wireless tag 1: This algorithm will enable assigning specific contents to each of the wireless tags 1. For example, if an artist issues a new single, then he/she assigns to each of the wireless tags 1 links to streaming, music video, information on tours, etc. All this contents will be accessible solely for persons who possess a specific wireless tag 1.
- Algorithm to confirm authenticity of a wireless tag 1: algorithm that enables verification whether a wireless tag 1 is genuine and is not counterfeit.
- Algorithm to analyse preferences of the recipients: algorithm that analyses the recipients' preferences and based on this provides them with dedicated contents at the artist's website to which a given wireless tag 1 is related.
- Algorithm to track user activity: algorithm that tracks activity of the users at the artist's website and based on this provides them with dedicated contents.
- Algorithm to generate dedicated offers: algorithm that generates dedicated offers for the owners of wireless tags 1 based on their activity at the artist's website.
- Algorithm to recommend contents: algorithm that recommends contents related to the artist's work to the recipients of the wireless tag 1 based on their preferences and activity at the website.
- Algorithm to generate statistics: algorithm that generates statistics based on the recipients' activity at the artist's website and based on these data provides him/her with the dedicated contents.
- Algorithm to monitor interactions: algorithm that monitors interactions of the recipients at the artist's website and provides them with dedicated contents based on their activity.
- Algorithm to analyse trends: algorithm that analyses trends related to the artist's work and based on this provides dedicated contents.

Reference numerals in the drawings:
1 - wireless tag
2 - rubber coating
3 - radio arrangement
4 - mounting hole
5 - decoration
6 - openings for a seam

## Claims

1. A wireless tag comprising a radio arrangement (3) with a non-volatile memory, and the radio arrangement (3) is configured to transmit data, in particular, in NFC technology, **characterized in that** the radio arrangement (3) is within a rubber coating (2), and preferably the radio arrangement (3) is inundated within the rubber coating (2).

2. The wireless tag according to claim 1, **characterized in that** the non-volatile memory is configured to store public data or private data.

3. The wireless tag according to claim 1, **characterized in that** the public data comprise at least one of: website address, IP address, mobile application address, location data, contact data, social network-related data, link for file downloading, medical data such as blood group or past illnesses.

4. The wireless tag according to claim 1, **characterized in that** the private data comprise cryptographic data, preferably the cryptographic data that enable user identification.

5. The wireless tag according to any one of claims 2-4, **characterized in that** the private data comprise at least one user-related information, in particular a dedicated user number, first name, surname, address, telephone number, mail address, localization, access rights or cryptographic data such as a private key.

6. The wireless tag according to any one of claims 1-5, **characterized in that** it is in a form selected from a patch, preferably with openings (6) for a seam, to be applied onto the clothing, or a charm for a key ring, and preferably it comprises a mounting hole (4), or a cup pad or a bar coaster, or a luggage tag or a zip fastener.

7. The wireless tag according to any one of claims 1-6, **characterized in that** the rubber coating (2) is made of a material which in its contents does not comprise chemical compounds of the group of metals, preferably from the group of heavy metals.

8. The wireless tag according to any one of claims 1-7, **characterized in that** on the rubber coating (2) there is a decoration (6), preferably the decoration (6) being a password or code.

9. A clothing article **characterized in that** it comprises a wireless tag (1) as described in claims. 1-8, and the wireless tag (1) is attached by sewing, gluing or by means of a Velcro fastener.

10. The clothing article according to claim 9, **characterized in that** it is a military clothing article or workwear article.

11. A method for user authorization, comprising the following steps:
a. reading-out of the data from a wireless tag as defined in claims 1-9,
b. verifying of user's authorization based on the data from the wireless tag,
c. rendering access, upon correct verification, for the user to a restricted area.

12. The method for user authorization according to claim 11, **characterized in that** the restricted area is a website or a restricted area such as a ski slope or a restricted area in a cultural event.

13. The method for user authorization according to any one of claims 11-12, **characterized in that,** prior to step a, the following steps occur:
d. logging-in at the website,
e. assigning, on a server, of the user's data to the data from the wireless tag.

14. The method for user authorization according to claim 13, **characterized in that** the user's data is information about the user's authorization, data enabling identification of the user, payment data, data related to cultural or sports events, such as a subscription ticket or a ticket.

15. The method for user authorization according to claims 13 or 14, **characterized in that,** in step d, a code is necessary, and preferably the code is on the wireless tag or the code is provided independently of the wireless tag 1, preferably in a form selected from a group comprising a business card, a sticker, an email message.
